# EUROPEAN PATENT APPLICATION

(11) **EP 1 954 049 A1**
(43) Date of publication of application: **06.08.2008**
(21) Application number: 07003198.4
(22) Date of filing: 15.02.2007
(51) Int. Cl.: H04N 7/173, H04N 5/445, H04L 29/08

(54) **Video system**

(30) Priority: 31.01.2007 US 898635 P
(71) Applicant: Koninklijke KPN N.V., 2516 CK The Hague (NL)
(72) Inventor: Bakker, Sander, 6131 HX Sittard (NL)
(74) Representative: Wuyts, Koenraad Maria

(57) **Abstract**

A video system (700) comprises a first control input (702) for selecting content to be rendered, an output (704) for providing a video signal for rendering on a display, a controller (706) for including the selected content into the video signal, and means (708) for including first additional content in the video signal in addition to the selected content, the first additional content being different from the selected content and representing second additional content relating to the first additional content. The system 700 also comprises a second control input (710) for selecting the second additional content to be rendered, and means (712) for including the second additional content in the video signal upon receiving a selection by the user of the second additional content. A server system (750) is also provided.

## Description

### FIELD OF THE INVENTION

The invention relates to a video system, a server system, and a method of providing content.

### BACKGROUND OF THE INVENTION

In recent years, television systems have become more advanced. More features have become available. In order to make use of many different broadcasting media, different analog and digital broadcasting systems are being used. Such broadcasting media include terrestrial air, cable, and satellite. Such broadcasting systems include the traditional analog terrestrial air, cable, and satellite broadcasting systems, as well as digital video broadcasting (DVB) systems. Recently also digital systems based on ADSL technology have been developed for broadcasting television content via analog telephony networks. Most televisions do not support all these broadcasting systems. Instead, a subscriber to a particular broadcasting system uses a set-top box that is responsible for converting the broadcast signal into a video signal (e.g. SCART) that is compatible with the television.

Such set-top boxes sometimes provide more functionality than just converting a single channel of a broadcast programming signal into a video signal. An example of a set-top box allows a user to receive different television channels and radio channels. It also has a hard disk to store video programs and to enable live pausing and replaying of television programs. Also, the system allows a user to watch selected programs that have been broadcast during the past 10 days, as well as video on demand programs. The system also provides an electronic program guide (EPG) for providing the user with a current overview of programs to be broadcast.

### SUMMARY OF THE INVENTION

It would be advantageous to have an improved video system for use in an entertainment system. To better address this concern, in a first aspect of the invention a video system is presented that comprises
a first control input for selecting content to be rendered;
an output for providing a video signal for rendering on a display;
a controller for including the selected content into the video signal;
means for including first additional content in the video signal in addition to the selected content, the first additional content being different from the selected content and representing second additional content relating to the first additional content;
a second control input for selecting the second additional content to be rendered; and
means for including the second additional content in the video signal upon receiving a selection by the user of the second additional content.

The system provides a new way of interaction between a user and a video system. When the user selects content he or she would like to consume, the system provides the selected content. But in addition, first additional content is being rendered to bring some particular information to the attention of the user. For example, the first additional content comprises a news headline, a brief weather forecast, a sports result, a stock quote, or an advertisement. The user is then given the option to select to see second additional content relating to the first additional content. This way, when the first additional information, brought to the attention of the user without his specific request, triggers the user's interest, the user may obtain more related information by selecting to see the second additional content.

The system has a greatly simplified user interface. In existing systems, including electronic program guides, the user has to browse manually through the available information. This requires navigating through menus or through different pages or channels of content, while looking for the required information. In the proposed system, the user is automatically presented with additional content items, and only needs to select to render more related content whenever appropriate. Because navigating through menus or different pages or channels of content is not needed to access the first and second additional content, the user interface can be greatly reduced and the user experience is enhanced. The user needs to do nothing until the information relevant to him is presented automatically. Meanwhile, he can consume his selected content uninterrupted.

The system is particularly suited to bring under attention of the user a relatively large number of topics (by means of first additional content items), only a few of the topics being of interest to the user, where it is not known a priori which of the content items will be of interest to the user. The user is only bothered to the least possible extend as he can enjoy selected content simultaneously to a rendering of the topics.

The system provides an improved way of browsing through information. The user is not interrupted for a presentation of the additional content. Instead, both the selected content and a first portion of the additional content are presented. This means that the user can enjoy his selected content, and at the same time notes the first portion of the additional content. He then has the option whether to see the second portion of the additional content (which is related to the first portion of the additional content). If he believes, based on the first additional content, that the relating second additional content is not of interest to him at the moment, the user does not have to do anything and is not bothered any more. His presentation of the selected content is not interrupted. If he decides to consume also the second additional content, he can easily select to see it. One of the advantages is that the system finds out about the interests of the user without bothering him. His selection of the second additional content indicates he is interested; his refraining from selecting the second additional content indicates he is not interested.

The home entertainment system may for example be implemented in a television. The video system may also be implemented as a set-top box to be used in conjunction with a television. These two configurations are examples of entertainment systems. Such entertainment systems may comprise for example a display (usually as part of a television), a surround sound system, a video recorder, and a set-top box.

In an embodiment, the video system comprises a set-top box for use in a home entertainment system. This makes the system especially user friendly and economic to realize.

In an embodiment, the means for including the first additional content is arranged for including the first additional content into the video signal upon receiving the selection of content to be rendered via the first control input. This is a natural moment for presenting the first additional information as the user is ready to consume new content after making his selection. Preferably the first additional content is included in the video signal for a predetermined period of time.

An embodiment comprises means for replacing the first additional content regularly. By regularly replacing the first additional content with new content, it becomes possible to provide current information that is subject to change, such as stock quotes, special offers, whether forecasts, and news items. The content can be refreshed via an information provider connected to the video system via a network such as the Internet or a TV cable or ADSL network.

In an embodiment, the means for including the first additional content is arranged for also including in the video signal, together with the first additional content, an indication of a possibility to select the second additional content via the second control input. The indication makes it easier for the user to remember that he may select the second additional content relating to the first additional content for rendering.

In an embodiment, the controller for including the selected content and the means for including the first additional content are arranged for using at most one third of the area of a display for the first additional content, and at least half of the area of the display for the selected content. The content selected by the user is dominant in the video signal, therefore at most one third of the display is used for rendering the first additional content. It enhances the user viewing experience.

In an embodiment, the means for including the first additional content is arranged for including the first additional content as an overlay on top of the selected content in the video signal. This helps to avoid an irritation of the user because his selected content is presented as the most important information, the first additional information being only presented in an overlay.

In an embodiment, the means for including the second additional content is arranged for including the second additional content as a substantially screen-filling presentation in the video signal. Because the second additional information is explicitly selected by the user, it is justified to use substantially the complete frame (i.e., the substantially complete display area) for its presentation, using the substantially the full display, substantially replacing the presentation of the originally selected content. Preferably, the originally selected contents continues to be displayed in a small window (e.g. picture-in-picture).

An embodiment comprises
an input for receiving a broadcast programming signal, where the content available for being selected to be rendered via the first control input includes a plurality of channels of the broadcast programming; and
a stream selector for providing the selected channel for inclusion into the video signal under control of the controller.

This is useful because it allows the video system to be used in combination with broadcast programming.

An embodiment comprises a storage medium reader, where the content available for being selected to be rendered via the first control input includes at least one content item available via the storage medium reader, the storage medium reader being arranged for providing the selected content item for inclusion into the video signal under control of the controller. This is useful because it allows current information in the form of first and second additional information to supplement the fixed content on the storage medium.

An embodiment comprises an electronic program guide, where the content available for being selected to be rendered via the first control input includes data items in the electronic program guide; the electronic program guide being arranged for providing the selected data items for inclusion into the video signal under control of the controller. This allows for a more feature-rich electronic program guide.

An embodiment comprises an output for transmitting a background request to a server for the first additional content, the request comprising an identifier of the selected content; and an input for receiving the requested first additional content to be included in the video signal. Preferably the request also comprises user information.

Another embodiment comprises an output for transmitting a request to a server for the second additional content upon receiving the selection of the second additional content; and an input for receiving the requested second additional content to be included in the video signal.

Requesting and receiving the first and/or second additional content at the moment it is needed enables an external entity, such as a content provider or server, to determine the additional content. This facilitates remote control of the additional content, which makes it easier to keep the content up-to-date and to provide a relatively large number of content items.

An embodiment comprises a server system comprising
an output for transmitting a first additional content to a video system for inclusion in a video signal together with content selected by a user of the video system;
an input for receiving a request for second additional content, the request being transmitted by the video system upon receiving a selection by the user of the second additional content; and
an output for transmitting the requested second additional content to the video system for inclusion in the video signal.

This server system is particularly useful to be used with one or more of the video systems set forth.

An embodiment comprises a method of providing content, the method comprising
selecting content to be rendered;
providing a video signal for rendering on a display;
including the selected content into the video signal;
including first additional content in the video signal in addition to the selected content, the first additional content being different from the selected content;
selecting second additional content to be rendered, wherein the second additional content relates to the first additional content; and
including the second additional content in the video signal upon receiving a selection by the user of the second additional content.

An embodiment comprises instructions for causing a processor to perform the method set forth.

### BRIEF DESCRIPTION OF THE DRAWINGS

These and other aspects of the invention will be further elucidated and described with reference to the drawing, in which
Figure 1 illustrates aspects of a television broadcasting system;
Figure 2 illustrates a diagram of a screen layout and a remote control;
Figure 3 illustrates a diagram of a screen layout and a remote control;
Figure 4 illustrates a diagram of a screen layout;
Figure 5 illustrates a diagram of a screen layout and a remote control;
Figure 6 illustrates a diagram of a screen layout;
Figure 7 illustrates a diagram of an embodiment; and
Figure 8 illustrates processing steps of a method.

### DETAILED DESCRIPTION OF EMBODIMENTS

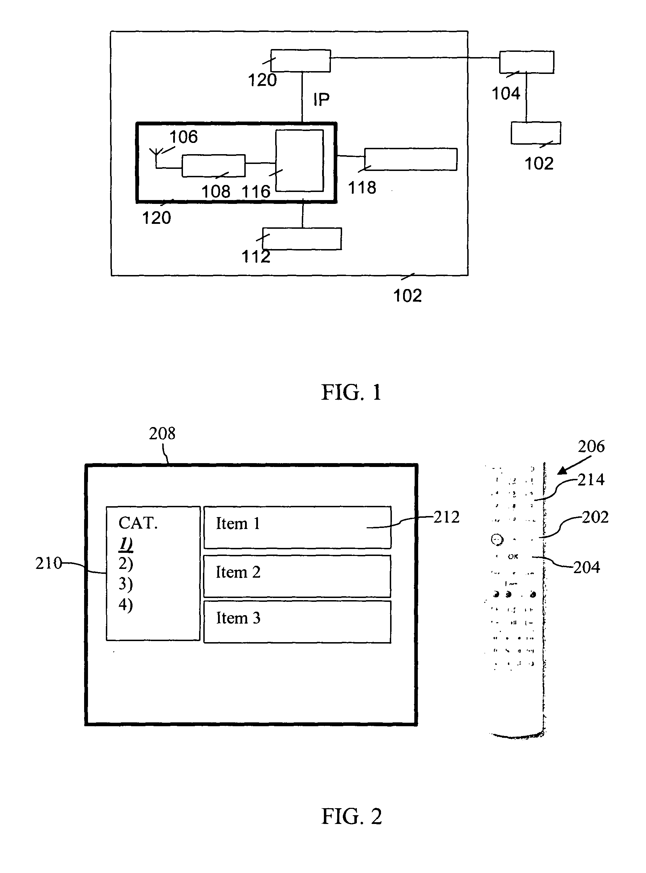

Figure 1 illustrates aspects of an exemplary television broadcasting system. It illustrates an antenna 106. The antenna 106 receives broadcast programming from a broadcaster. The signal received by the antenna 106 comprises a plurality of program channels. A TV tuner 108 is connected to the antenna 106 via a coax cable. The TV tuner is connected via a digital USB connection with a set-top box 116. The set-top box also has an IP network connection to connect to the Internet 104 via an internet gateway 120. Via the Internet 104, the set-top box 116 also can connect to a datacenter 102. The set-top box 116 produces a video signal for rendering on television 118. The video signal is provided to the television via a SCART interface. A remote control 112 is used to control operation of the set-top box 116. The set-top box 116 and the TV tuner 108 are integrated into a single unit 120.

Figure 1 is only intended to provide an illustrative context in which the features disclosed herein may be applied. It is not intended to be limiting in any way. The TV tuner and the set-top box may also be provided separately, and the TV tuner may also be connected to a satellite dish, a cable network or an ADSL connection instead of or in addition to the antenna. The functionality of the separate units shown in the Figure may be combined in a single unit, or may be distributed over several units in a different way. Also, the connections to external networks via the antenna 106 and the Internet 104 are only examples and may be replaced by any other communications means. The SCART interface may be replaced by other connectors such as DVI or HDMI.

Figure 2 illustrates some of the features provided by the set-top box 116. These features are controlled by a user via the remote control 112, 206. The screen shot 208 shows a menu 210 with some content categories such as: Personal, Local content, Themes, and an electronic program guide. The user can navigate through these categories using up/down arrows and OK button 204. Content items 212 appear on the right hand side of the screen shot 208, here the content items in the selected category "1)" are displayed. Using the button 202 on the remote control 206, the user can switch to a TV channel. A particular channel can be selected by using numeric keys 214 available on the remote control 206.

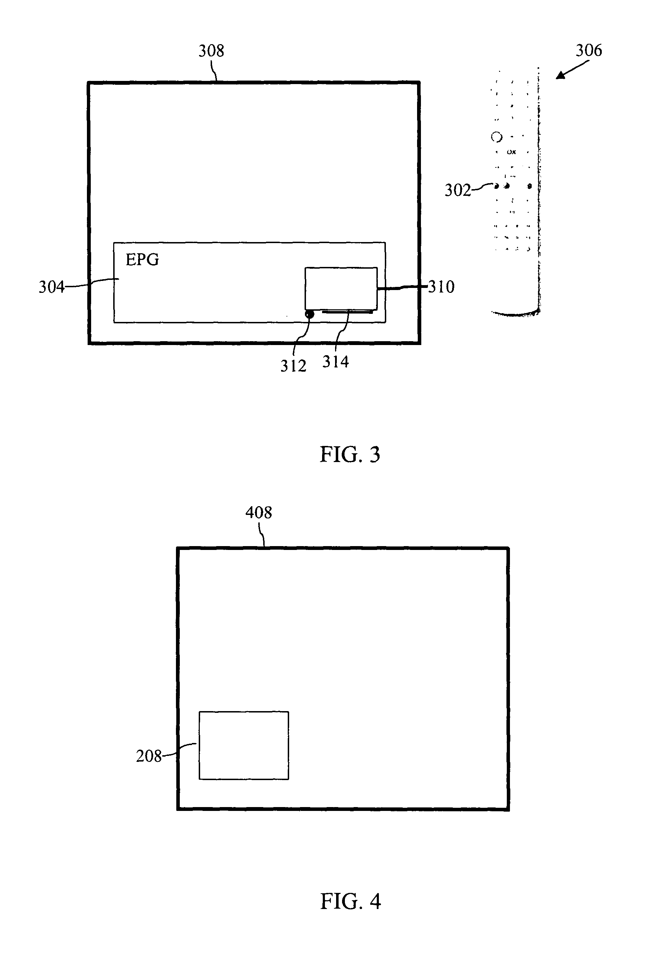

Figure 3 shows a diagram of a screen shot 308 of a selected channel. At the same time that the channel content is rendered on the television 118, some information about the channel programming (e.g. a title of the current show) is provided in box 304. The box also contains first additional content 310. Below the first additional content, a button 312 is displayed in a specific, predefined color, for example red, next to a short line of text indicating the presence of second additional content relating to the first additional content 310. This is to indicate to the user that pressing a corresponding red button 302 on the remote control 306 will provide second additional information relating to the first additional information. When the user presses a corresponding red button 302 on his remote control 306, he is selecting second additional content, where the second additional content is relating to the first additional content. For example, the first additional content 310 comprises a logo of an animal channel or an image of an animal. The text 314 comprises the name of a TV channel or slide show about animals.

Figure 4 shows the second additional content in screen shot 408. It is a slide show about animals. The slide show content is retrieved by the set-top box 116 from the server 102. The page is rendered after the user presses the red button 302. The originally selected channel content, which was previously shown in full-screen 308, now is rendered in a small box 208.

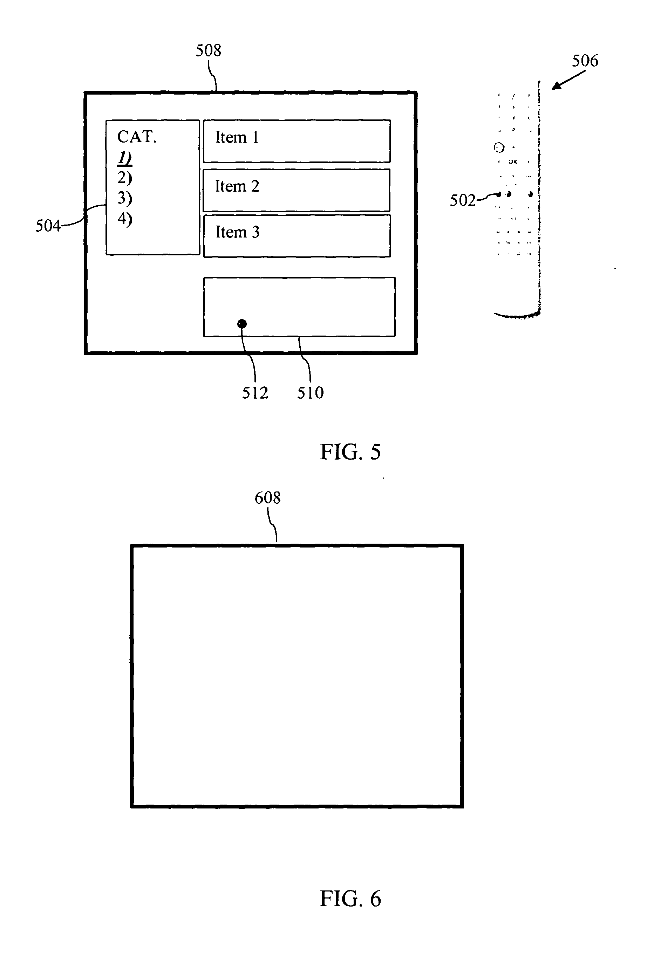

Figure 5 shows another diagram of a screen layout 508 and of the remote control 506. On the screen display is again electronic program guide information 504. First additional information 510 is shown near the bottom of the screen, together with an indication 512 of a button on the remote control 506 that the user can press to see second additional information relating to the first additional information. The first additional information 510 comprises a company logo.

Figure 6 shows a screen layout comprising second additional information relating to the first additional information 510. This screen is provided to the user after pressing the button 502 indicated by indicator 512 in Figure 5. The screen 608 comprises an advertisement about some of the products of the company corresponding to the company logo 510.

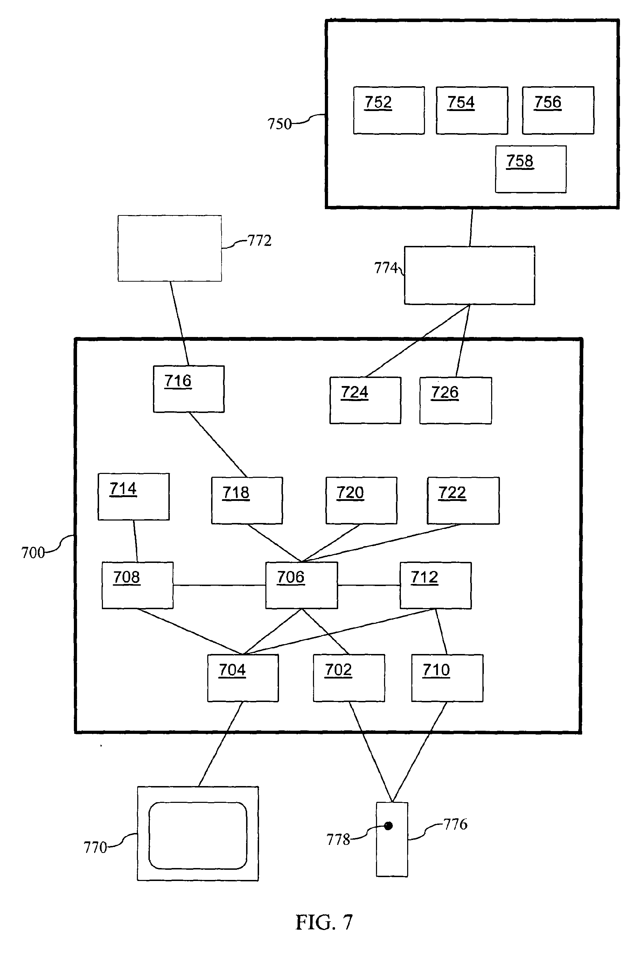

Figure 7 illustrates a system comprising a video system 700, a server 750 connected to the video system 700 via a network 774, a display 770 connected to the video system via a video connector, a remote control 776 communicating with the video system 700 via infrared communication, and a broadcaster 772 sending video content in a plurality of channels via a medium (e.g. DVB-T, or a cable television network) to the video system 700. The video system 700 comprises a first control input 702 for selecting content to be rendered. The user sends commands to the first control input 702 via the remote control 776. Upon receiving the command to select for example a channel of content, the input 702 passes the command to a controller 706 which then includes the selected content in a video signal that is provided to the output 704 for rendering on a display 770.

The system 700 also comprises a means 708 for including first additional content in the video signal in addition to the selected content. The first additional content is different from the selected content and represents second additional content relating to the first additional content. The first additional content may be relating to the selected content, for example, it may represent more detailed information about a topic currently being rendered. Alternatively, the first additional content is unrelated or only slightly related to the selected content. For example, the first additional content may comprise an advertisement for some product, or it may comprise a hint for a user that some information has become available, for example that a breaking news story is about to start on another channel.

The system 700 also comprises a second control input 710 for selecting the second additional content to be rendered. For example a button 778 on the remote control 776 is dedicated for selecting the second additional content. This allows a one-click selection of the second additional content. The control signal corresponding to the button 778 is sent by the remote control 776 to the second control input 710. The system 700 also comprises a means 712 for including the second additional content in the video signal upon receiving the selection by the user.

The system 700 may be implemented to add functionality to a television set or in a separate set-top box.

Preferably the first additional content is shown to the user via the output 704 and the display 770 immediately or shortly after receiving the selection of content to be rendered via the first control input. The first additional content may be displayed together with meta information about the content being rendered (for example channel name, program title, title and start time of next program). The additional content may also be displayed at for example regular time intervals. The system also comprises means 714 for replacing the first additional content regularly. The first additional content is dynamic. It can be replaced every time it is displayed (i.e. every time after receiving the selection via the first control input), or the first additional content can be the same every time the selection via the first control input 702 is made during a particular time interval. The first additional content items may be provided by the broadcaster 772 or by the server 750.

The means 708 for including the first additional content also includes an indication of the possibility for the user to select the second additional input for rendering. The selection is performed via the second control input 710 and the button 778 on the remote control 776. For example the first additional content includes the indication. Alternatively, a separate indication is displayed next to the rendering of the first additional content or a predetermined sound is included in the video signal for rendering.

At most one third of the screen area is used by the means 708 for the first additional content, and at least half of the screen area is used by the controller 706 for the selected content. For example, a bar or a small rectangular region near the bottom of the screen is used for the first additional content. The combination of the two content types by the means 708 and the controller 706 into a single video signal is realized by means of known digital and/or analog video processing. For example, known overlay techniques are used to include the first additional content as an overlay on top of the selected content in the video signal. The second additional content, included by the means 712, is a substantially screen-filling presentation. The content originally selected via the first control input 702 is disregarded or is rendered in a relatively small area of the screen.

The video signal 704 selected via the first control input 702 is provided by means of video broadcaster 772 to a broadcast programming input 716 of the system. This may be an analog or digital signal received via an antenna or cable, or it may be one or more digital video streams provided via an IP network and/or a DSL network. The broadcaster 772 and the server 750 may be the same thing and/or may have the same network address. The broadcast programming signal 716 makes available a plurality of channels to be selected for rendering via the first control input 702. The controller 706 sends a corresponding control signal to a stream selector 718 which parses the signal received by input 716 to extract the selected channel content and which provides the extracted content to the video output 704.

The video system 700 also comprises a storage medium reader 720. This storage medium reader 720 may comprise a hard disk for temporarily storing content received via the input 716 from the broadcaster 772. The storage medium reader 720 may also support removable media such as DVD's. The first control input 702 is used to select content items available via the broadcast programming input 716 and/or via the storage medium reader 720. If an item is selected from the storage medium reader 720, it starts processing the selected item and provides the corresponding video signal to the video output 704. The selected content item is accompanied by first additional content.

The video system also comprises an electronic programming guide (EPG) 722. The EPG obtains broadcast programming information from the broadcaster 772 and/or from the server 750. The EPG is used to browse and select an interesting content item for rendering. Thus, the content items available for being selected to be rendered via the first control input 702 includes data items in the electronic program guide. Such data items may include textual information as well as still images and trailers of TV programs. Upon selection of such a data item, the means 708 may include first additional information into the output signal provided by the video output 704. This first additional information is presented on the display 770 together with the requested data item.

The video system 700 comprises an output 724 for transmitting a background request to a server for the first additional content, the request comprising an identifier of the selected content. This request is sent upon receiving the selection of content via the first control input 702. The request may also be sent at regular time intervals. The requested first additional content is received from the server 750 via an input 726 for inclusion in the video signal. The request may also comprise user information such as a zip code, a smart card number, a name and address of the user. The output 724 is also used for transmitting a request to a server for the second additional content. This can be done upon receiving the selection of the second additional content, or in the background before receiving the selection of the second additional content. The input 726 is also used for receiving the requested second additional content to be included in the video signal. The first additional content comprises for example an image or text or a movie. The second additional content comprises for example a TV channel, a website, a photo, a slideshow, or a video.

The server system 750 comprises an output 752 for transmitting a first additional content to the video system 700 for inclusion in a video signal together with content selected by a user of the video system. The server system 750 also comprises an input 754 for receiving a request for second additional content. The server system 750 also comprises an output 756 for transmitting the requested second additional content to the video system for inclusion in the video signal upon receiving the request. The input 754 also receives the request from the video system 700 via the network 774 for the first additional content. The server system 750 also comprises an output 758 for transmitting video broadcast programming comprising a plurality of channels available for selection by the user the video system. This output 758 can be used instead of or in addition to the broadcaster 772. The server system 750 can be implemented for example in a single high-end computer or in a computer farm comprising a network of a plurality of servers.

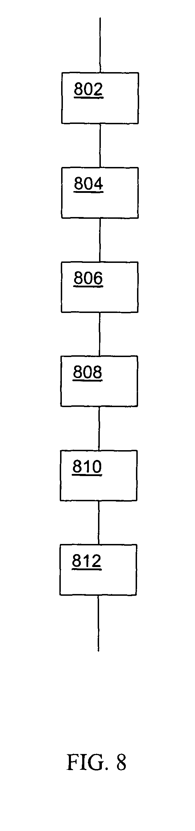

Figure 8 illustrates processing steps of an embodiment that comprises selecting 802 content to be rendered; providing 804 a video signal for rendering on a display; including 806 the selected content into the video signal; including 808 first additional content in the video signal in addition to the selected content, the first additional content being different from the selected content; selecting 810 second additional content to be rendered, wherein the second additional content relates to the first additional content; and including 812 the second additional content in the video signal upon receiving a selection by the user of the second additional content. These program steps may be implemented in a computer program.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A video system (700), comprising
a first control input (702) for selecting content to be rendered;
an output (704) for providing a video signal for rendering on a display;
a controller (706) for including the selected content into the video signal;
means (708) for including first additional content in the video signal in addition to the selected content, the first additional content being different from the selected content and representing second additional content relating to the first additional content;
a second control input (710) for selecting the second additional content to be rendered; and
means (712) for including the second additional content in the video signal upon receiving a selection by the user of the second additional content.

2. The video system according to claim 1, wherein the video system comprises a set-top box for use in a home entertainment system.

3. The video system according to claim 1 or 2, wherein the means for including the first additional content is arranged for including the first additional content into the video signal upon receiving the selection of content to be rendered via the first control input.

4. The video system according to any of the preceding claims, further comprising means (714) for replacing the first additional content regularly.

5. The video system according to any of the preceding claims, wherein the means for including the first additional content is arranged for also including in the video signal, together with the first additional content, an indication of a possibility to select the second additional content via the second control input.

6. The video system according to any of the preceding claims, wherein the controller for including the selected content and the means for including the first additional content are arranged for using at most one third of the area of a display for the first additional content, and at least half of the area of the display for the selected content.

7. The video system according to any of the preceding claims, wherein the means for including the first additional content is arranged for including the first additional content as an overlay on top of the selected content in the video signal.

8. The video system according to any of the preceding claims, wherein the means for including the second additional content is arranged for including the second additional content as a substantially screen-filling presentation in the video signal.

9. The video system according to any of the preceding claims, further comprising
an input (716) for receiving a broadcast programming signal, where the content available for being selected to be rendered via the first control input includes a plurality of channels of the broadcast programming; and
a stream selector (718) for providing the selected channel for inclusion into the video signal under control of the controller.

10. The video system according to any of the preceding claims, further comprising
a storage medium reader (720), where the content available for being selected to be rendered via the first control input includes at least one content item available via the storage medium reader, the storage medium reader being arranged for providing the selected content item for inclusion into the video signal under control of the controller.

11. The video system according to any of the preceding claims, further comprising
an electronic program guide (722), where the content available for being selected to be rendered via the first control input includes data items in the electronic program guide; the electronic program guide being arranged for providing the selected data items for inclusion into the video signal under control of the controller.

12. The video system according to any of the preceding claims, further comprising
an output (724) for transmitting a background request to a server for the first additional content, the request comprising an identifier of the selected content; and
an input (726) for receiving the requested first additional content to be included in the video signal.

13. The video system according to claim 12, wherein the request also comprises user information.

14. The video system according to any of the preceding claims, further comprising
an output (724) for transmitting a request to a server for the second additional content upon receiving the selection of the second additional content; and
an input (726) for receiving the requested second additional content to be included in the video signal.

15. The video system according to any of the preceding claims, wherein the first additional content comprises an image or text.

16. The video system according to any of the preceding claims, wherein the second additional content comprises a TV channel, a website, a photo, a slideshow, or a video.

17. A server system (750) comprising
an output (752) for transmitting a first additional content to a video system for inclusion in a video signal together with content selected by a user of the video system;
an input (754) for receiving a request for second additional content, the request being transmitted by the video system upon receiving a selection by the user of the second additional content; and
an output (756) for transmitting the requested second additional content to the video system for inclusion in the video signal.

18. The server system according to claim 17, further comprising an input (754) for receiving a request for the first additional content, the request being transmitted by the video system upon receiving a selection of content to be rendered, and the request comprising an identifier of the selected content.

19. The server system according to claim 17 or 18, further comprising an output (758) for transmitting video broadcast programming comprising a plurality of channels available for selection by the user the video system.

20. A method of providing content, the method comprising
selecting (802) content to be rendered;
providing (804) a video signal for rendering on a display;
including (806) the selected content into the video signal;
including (808) first additional content in the video signal in addition to the selected content, the first additional content being different from the selected content;
selecting (810) second additional content to be rendered, wherein the second additional content relates to the first additional content; and
including (812) the second additional content in the video signal upon receiving a selection by the user of the second additional content.

21. A product comprising instructions for causing a processor to perform the method according to claim 20.
